# EUROPEAN PATENT SPECIFICATION

(11) **EP 2 360 975 B1**
(45) Date of publication and mention of the grant of the patent: **12.09.2012**
(21) Application number: 10290065.1
(22) Date of filing: 12.02.2010
(51) Int. Cl.: H04W 52/02

(54) **Power savings in communications cells**
Stromeinsparungen in Kommunikationszellen
Économie d'énergie dans des cellules de communications

(43) Date of publication of application: 24.08.2011
(73) Proprietor: Alcatel Lucent, 75007 Paris (FR)
(72) Inventor: Gerlach, Christian, 71254 Ditzingen (DE); Zeller, Dietrich, 71067 Sindelfingen (DE)
(74) Representative: Wetzel, Emmanuelle

(56) References cited:
- EP-A1- 2 175 682
- WO-A1-02/07464
- WO-A1-2009/115554
- WO-A1-2009/140988
- WO-A2-98/57516
- US-B1- 6 360 106
- ELAD BEN IZHAK ET AL: "Bit loading for OFDM with Quasi-constant transmission power" ELECTRICAL AND ELECTRONICS ENGINEERS IN ISRAEL, 2006 IEEE 24TH CONVENT ION OF, IEEE, PI, 1 November 2006 (2006-11-01), pages 30-31, XP031052699 ISBN: 978-1-4244-0229-8
- CHIARAVAGLIO L ET AL: "ENERGY-AWARE UMTS ACCESS NETWORKS" INTERNET CITATION 1 January 2008 (2008-01-01), page 5PP, XP007913001 Retrieved from the Internet: URL:http://www.telematica.polito.it/ciullo /papers/ciullo_wgreen08.pdf [retrieved on 2010-05-07]

## Description

### Field of the Invention

The invention relates to the field of telecommunications, and, more specifically, to energy savings for base stations having a plurality of transmit antennas.

### Background

This section introduces aspects that may be helpful in facilitating a better understanding of the invention. Accordingly, the statements of this section are to be read in this light and are not to be understood as admissions about what is in the prior art or what is not in the prior art.

Energy savings in the transmit operation of a base station of a communications network, e.g. of the Long Term Evolution (LTE)-type, may lead to significant reductions of the operation expenses of the base station. A large part of the power consumption of a base station radio part is typically consumed by one or more power amplifiers which are used for amplification of RF signals before transmitting the RF signals via one or more transmit antennas. Yet, in case of low traffic times during the day (or night), it is not necessary to have the full downlink and uplink throughput capacity available, and a reduced system would be sufficient in this case.

One possibility for power savings would be to switch off all power amplifiers of a base station in some sub-frames (i.e. in time intervals in the order of ms). However, during these time intervals, reference signals provided by the base station will also be switched off. Yet, these reference signals are at the moment used for reference signal received power (RSRP) measurements by user equipments of the cell and of neighboring cells e.g. to allow to decide if a handover between cells is advisable. Thus, such a proposal has a severe impact on the accuracy of the RSRP measurements and also on the handover between cells, as the cell with the switched-off power amplifiers will be considered as a cell of reduced size by user equipments / neighboring cells.

WO 02/07464 discloses turning off power amplifiers in a base station during periods of low traffic, to reduce power consumption by the base station.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a base station as claimed in claim 1.

According to the invention, it is proposed to have at least one power amplifier permanently switched on, when a transmit operation at low throughput is necessary, and to selectively switch on or off the other power amplifiers in dependence of the (expected) traffic load in the cell. The power amplifier which is permanently switched on may be - but not necessarily has to be - used for transmitting the reference signals in such a way that the reference signal received power detected by the user equipments of own and neighboring base stations remains unchanged, as will be described in further detail below. This can be combined with switching off all power amplifiers during times of no transmission and when no user equipment needs to make a measurement.

It will be appreciated that typically, the traffic load in a cell changes only slowly, such that there is ample time to switch the unused power amplifier(s) on in case that the load in the cell increases. The future (expected) traffic load may be estimated e.g. based on a statistics of the traffic load over the day and/or on an amount of data / traffic which has been provided by the base station over a preceding time interval, e.g. of several milli-seconds to minutes.

In one embodiment, the at least one power amplifier which is permanently switched on has a higher maximum output power than at least one of the power amplifiers which are selectively switched on or off. Typically, the power amplifiers which are switched on or off have identical maximum output power, which is smaller than the maximum output power of the power amplifier(s) which is/are permanently switched on. For instance, the power amplifiers which are permanently switched on may have e.g. two or four times of the output power of the power amplifiers which are selectively switched on or off.

In a further embodiment, the base station is adapted to keep an overall transmission power of the transmit antennas constant when the at least one power amplifier is switched off. In this way, the cell coverage area and the transmission bandwidth can stay the same when the power amplifier(s) is/are switched off. A power amplifier which is idle or in high backoff mode, i.e. which is used only at a low output power as compared to its maximum possible output power still has a considerable power consumption. Thus, switching off at least one of the power amplifiers even though keeping the overall transmission power constant may still lead to a considerable reduction of power consumption. Moreover, in this case, it is particularly advantageous to have one or more power amplifiers with a maximum output power which exceeds the maximum output power of the power amplifiers which are switched off, as the transmit power generated by the switched-off amplifiers may then be provided by the one or more active power amplifiers.

In a particular important further embodiment, the base station is adapted to keep an overall transmit power spectral density of the transmit antennas constant when the at least one power amplifier is switched off. For example, if the overall transmit power is reduced due to the switching off of the power amplifier, the overall transmit power spectral density may be kept constant when the transmission bandwidth is reduced by the same factor. In this way, in some cases (see below), signalling a change of reference signal transmit power spectral density may be avoided.

In another embodiment, the base station is adapted for signaling a change of a reference signal transmit power spectral density due to the switching off of the at least one power amplifier and increasing the transmit power spectral density of the remaining antennas which includes a reference antenna which is permanently switched on. This signaling is done to at least one of a user equipment served by the communications cell and a base station of at least one neighboring communications cell. In this case, user equipments are informed when necessary about the change of the number of antennas e.g. by broadcast messages. Alternatively or in addition, messages may be sent over the X2-interface from the base station to neighboring base stations so that handover events and evaluation of UE measurements can be updated accordingly. Typically, one of the antennas which are permanently switched on is used as a reference antenna for power measurements.

The base station is adapted to operate the transmit antennas with a transmission characteristics which resembles a transmission characteristic of a single transmit antenna, the base station being further adapted to operate the power amplifiers such that a transmit power spectral density seen as coming from the single transmit antenna is kept constant when the at least one power amplifier is switched off.

In this specific case, the transmit antennas associated with a cell, are operated as one single virtual antenna. In other words, their complex antenna precoding functions are chosen such that their transmission power characteristics resembles to (is identical to) that of a single antenna, possibly with omnidirectional radiation. In the case of such a virtual antenna arrangement, the reference symbols which are transmitted by the plurality of antennas and received by the user equipment seem to originate from a single antenna. Consequently, when the reference signal transmit power spectral density is kept constant but the bandwidth is reduced, the reference signal received power, RSRP measured e.g. over a core bandwidth will not be changed by the switching off of the at least one antenna. In that way, reconfiguration messages for other base stations (e.g. over the X2 interface) or to user equipments may be avoided. It should be noted that in a situation where no antenna virtualization is used, the reference signal received power may change even if the overall transmit power spectral density (i.e. the sum over individual antenna transmit power spectral densities) is kept constant. This is due to the fact that the transmit power spectral density of the reference antenna needs to be increased and the bandwidth needs to be decreased such that the transmit power of the reference antenna is kept constant. This is done in order to make up (inside the remaining transmission bandwidth) for the missing power spectral densities of the switched off antennas. Since in a handover region of two cells with different antenna configuration the combined Signal-to-Interference Ratio (SIR) should be the same as before (approx 0 dB) the described increase in power spectral density is necessary.

In contrast, in case of antenna virtualization the "DL RS TX power" is already high since it belongs to a single antenna with the power equal to the sum of transmission powers of the power amplifiers. The reduction in bandwidth can then in steps be traded against fully switching off discrete power amplifiers. Typically the user equipment / base stations measure the RSRP only for a single transmit antenna used as a reference antenna, even though two or more transmit antennas are used for serving a cell. In such a case, antenna virtualization is a pre-requisite for allowing the measured RSRP not to be affected by switching off the at least one power amplifier.

In another embodiment, a bandwidth of the at least one active transmit antenna is changed when switching off the at least one power amplifier. In this way, when the overall transmit power is changed, e.g. decreased, the transmit power spectral density PSD may be kept constant, as the PSD is defined as: PSD = Power / Bandwidth. Thus, when reducing both the power and the bandwidth by the same factor, the transmit power spectral density will not change, and, in case of virtual antennas, the RSRP will not be affected. For instance, when the total transmission power is reduced by a factor of four, the bandwidth may also be reduced e.g. from 20MHz to 5 MHz, such that the PSD will remain constant.

Further aspects of the invention relate to a communications cell comprising a base station as described above, and to a wireless network, in particular in compliance with the LTE standard, comprising at least two communications cells of the type described above. The cell, respectively, the network may be subject to considerable power savings due to the switching off of one or more power amplifiers.

A further aspect relates to a method as claimed in claim 7. The method as described herein provides the same advantages as have been described with reference to the base station described hereinabove, such that these advantages will not be repeated here.

In one variant, the method further comprises: operating the power amplifiers such that an overall transmit power and/or an overall transmit power spectral density generated by the plurality of transmit antennas is kept constant when the at least one power amplifier is switched off, thus enabling the cell coverage area to stay the same and/or possibly to avoid additional signaling.

In another variant, the method further comprises: signaling a change of a transmit power spectral density due to the switching off of the at least one power amplifier, preferably by signaling a change of the transmit power spectral density of a reference antenna which is permanently switched on to at least one of a user equipment served by the communications cell and a base station of at least one neighboring communications cell. In this way, evaluation of UE measurements / parameters may be adjusted such that the handover of user equipments between two cells are not affected when switching off one or more of the power amplifier(s).

In a further variant, the method comprises: operating the transmit antennas with a transmission characteristic which resembles a transmission characteristic of a single transmit antenna, and operating the power amplifiers such that a transmit power spectral density seen as coming from the single transmit antenna is kept constant when the at least one power amplifier is switched off. As indicated above, in this way, reconfiguration messages for other base stations (e.g. signaled over an X2 interface) may be dispensed with.

In a further variant, a bandwidth of the at least one active transmit antenna is changed when switching off the at least one power amplifier. When the overall power is changed, by adequately adjusting the bandwidth, the power spectral density, and, in case of using virtual antennas, the DL RS TX power may be kept constant.

In another variant, the at least one power amplifier is switched off for more than one second, preferably for more than ten seconds. Even when switching off the power amplifier for only a short time interval such as a second, the power consumption of the base station / transmit frontend may be considerably reduced during low load operation.

A final aspect of the invention relates to a computer program product adapted to perform all the steps of the method described above. The computer program product may be implemented in the form of a suitable software and/or hardware.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- Fig. 1: shows a schematic diagram of an embodiment of communications cells for performing power savings according to the invention,
- Fig. 2: shows a schematic diagram of a transmit frontend of a base station for the cells of Fig. 1, and
- Fig. 3: shows a schematic diagram of a power spectral density in dependence of frequency for two operation modes of the base station of the cells of Fig. 1.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

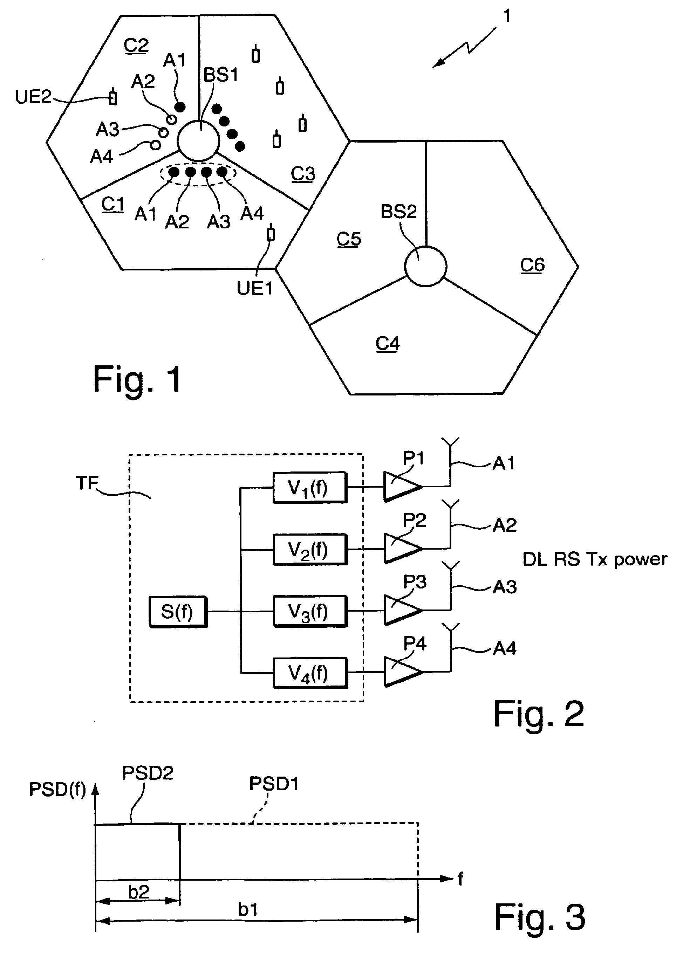

**Fig. 1** shows a detail of a communications network 1 in compliance with the LTE-advanced standard, having a first and a second base station BS1, BS2. Each of the base stations BS1, BS2 defines an area of radio coverage. The area of radio coverage of each base station BS1, BS2 is divided into three cells C1 to C3, resp., C4 to C6, each spanning an angular range of 120°. For each cell C1 to C6, the base stations BS1, BS2 have a number of four transmit antennas **A1** to **A4**, being represented only for the first and second cells C1, C2 of the first base station BS1 for the sake of simplicity.

As can be gathered from Fig. 1, a considerable number of user equipments is present in the third cell C3, whereas a smaller number (only one in the present example) is arranged in the first and second cells C1, C2, respectively. Thus, there is a high traffic load / amount of data to be transmitted by the antennas of the third cell C3, such that all of their antennas are active. In contrast thereto, in the first and second cells C1, C2, there is only low traffic load, such that only the first of the transmit antennas A1 is active, whereas the other transmit antennas A2 to A4 are switched off.

For switching off the antennas A2 to A4, a power amplifier **P2** to **P4** (see Fig. 2) being associated with a respective one of the antennas A2 to A4 is switched off, whereas a power amplifier P1 associated with the first antenna A1 is permanently switched on. As can be gathered from Fig. 2, the power amplifiers P1 to P4 are used for amplification of a respective RF signal provided to the transmit antennas A1 to A4 by a transmit frontend **TF** of the base station BS1 (represented only for one cell in Fig. 2). The switching on or off of the power amplifiers P1 to P4 may be controlled by the transmit frontend TF, e.g. by switching on or off a supply voltage which is provided to the power amplifiers P1 to P4, e.g. to a drain terminal of a power transistor. It will be understood that the supply voltage of active power amplifier P1 need not be constant, but may vary e.g. depending on an envelope of the amplified signal (when the latter is used in a so-called envelope tracking configuration).

In the second cell C2, the power amplifiers P2 to P4 which are switched off have a lower maximum output power (different power class) as compared to the first power amplifier P1. In the present example, the first power amplifier P1 has a maximum output power which is four times the output power of each of the switched-off power amplifiers P2 to P4, i.e. P_{out,1} = 4 P_{out,i} (i=2, 3, 4). Consequently, the first power amplifier P1 may provide the same output power as a configuration of four power amplifiers each with the same (maximum) output power P_{out,i}. In this way, for the (unlikely) case that a fast increase of the traffic load occurs, the first power amplifier P1 will be capable of providing the required output power for the cell C2, resp., C1. It will be understood that alternatively, the output power of the first power amplifier P1 may be another multiple, e.g. two times, of the output power of each of the second to fourth power amplifiers P2 to P4. Alternatively, all four power amplifiers P1 to P4 may have identical maximum output power.

In particular when a first power amplifier P1 is used which has a maximum output power being higher than that of the other amplifiers P2 to P4, the overall transmit power of the antennas may be kept constant when switching off the second to third power amplifiers P2 to P4. Thus, the cell coverage area of the second cell C2 can remain the same. However, even though the transmit power in the second cell C2 remains the same, the power consumption of the base station BS1 which serves the second cell C2 will be reduced, as the second to fourth power amplifiers P2 to P4 are switched off, typically consuming a considerable amount of power even when being in low load operation or in an idle state.

Considering now the case that the overall transmit power in the second cell C2 remains constant when switching off the second to fourth power amplifiers P2 to P4 and the transmission bandwidth remains unchanged, a summed up transmit power spectral density of the antenna arrangement A1 to A4 in the second cell C2 (as defined by PSD = power / bandwidth) will remain constant. However, even though the overall transmit power spectral density remains constant, a reference signal received power measured by a user equipment UE2 arranged in the second cell C2 will change. This is due to the fact that the reference signal received power is typically measured by the user equipment UE2 only for one of the four antennas A1 to A4, in the present example for the first antenna A1 which is permanently switched on and serves as a reference antenna. Thus, even though the overall transmit power spectral density remains constant, the reference signal transmit power spectral density of the first antenna A1 "DL RS TX power" will change, such that the reference signal received power measured by the user equipment UE2 will also change.

Consequently, the base station BS1 will signal the change of the reference signal transmit power spectral density "DL RS TX power" due to the switching off of the second to fourth power amplifiers P2 to P4 to the user equipment UE2 of the second cell C2, e.g. by using a broadcasting message. This implies signaling a change of the reference signal transmit power spectral density "DL RS TX power" of the first (reference) antenna A1. In a similar way, the change of the reference signal transmit power spectral density "DL RS Tx power" may be indicated e.g. to the base station BS2 comprising neighboring communications cells C4 to C6 and to further neighboring base stations (not shown in Fig. 1) by direct communications between the base stations BS1, BS2, e.g. over an X2 interface.

In the following, with reference to the first cell C1 of the first base station BS1, it will be explained how to keep the reference signal transmit power spectral density "DL RS TX power" and thus also the reference signal received power spectral density in a user equipment **UE1** of the first cell C1 constant. For this purpose, the four transmit antennas A1 to A4 in the first cell C1 are operated in such a way that their transmission characteristics is similar to (or even identical) to the transmission characteristics of a single transmit antenna (as indicated by the dashed line in the first cell C1 of Fig. 1). As the antennas A1 to A4 act as a single antenna, the user equipment UE1 in the first cell C1 cannot distinguish between the antennas A1 to A4 and will consequently measure a reference signal received power which is due to all four antennas A1 to A4, i.e. seen as coming from a single transmit antenna (seen as first antenna).

Consequently, when the transmit power spectral density is kept constant when switching off the three power amplifiers P2 to P4 and reducing the bandwidth, also the DL RS TX power and the reference signal received power spectral density measured by the first user equipment UE1 will also remain constant, such that no signaling has to be performed in this case. In other words, the solution proposed for the first cell C1 is transparent for the user equipment UE1, as it will calculate the reference signal received power spectral density as before.

Fig. 2 shows a configuration which allows to generate such a "virtual" antenna for the first cell C1 from a set of four transmit antennas A1 to A4. An input signal **S(f)** is provided to four different signal paths, each having a component which applies a different complex precoding function **V₁(f)** to **V₄(f)** to a respective input signal. As indicated above, the four precoding functions V₁(f) to V₄(f) are chosen such that the overall transmission characteristics of the four antennas A1 to A4 resembles that of a single antenna, making the transmit antennas indiscernible for the user equipment UE1. The choice of the precoding functions V₁(f) to V₄(f) which allows to generate a desired transmission characteristic is known to one skilled in the art, so that this issue will not be described in greater detail herein.

Of course, for keeping the reference signal transmit power spectral density "DL RS Tx power" constant, it is not required to keep the overall transmit power in the first cell C1 constant. **Fig. 3** represents a power spectral density **PSD1** of the base station BS1 for the first cell C1 for the situation when all four transmit antennas A1 to A4 are active, having a bandwidth of **b1** = 20 MHz. When the transmit power is reduced e.g. by a factor of four when switching off the second to fourth power amplifiers P2 to P4, the bandwidth may at the same time also be reduced by a factor of four, i.e. to b2 = 5 MHz, such that the resulting transmit power spectral density PSD2 and thus the reference signal received power spectral density measured by the user equipment UE1 e.g. inside a core bandwidth will not be affected by switching off the second to fourth power amplifiers P2 to P4.

In the way described above, energy savings in the operation of base stations (e.g. eNodeBs in LTE-networks) may be provided while at the same time possibly avoiding or at least keeping the number of reconfiguration messages supporting handover decisions between the cells C1, C2 low. It will be appreciated that as the traffic load in a cell typically does not change very rapidly, one or more of the power amplifiers may be kept switched off for several seconds, minutes or even hours (e.g. during nighttime). One skilled in the art will also appreciate that it is possible to keep two or more the power amplifiers permanently switched on and/or to use a higher or lower number of transmit antennas / power amplifiers in a cell.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Base station (BS1) for a communications cell (C1, C2, C3) of a wireless communications network (1), comprising:
a plurality of transmit antennas (A1, A2, A3, A4) and
a plurality of power amplifiers (P1, P2, P3, P4)for providing transmission power to the plurality of transmit antennas (A1, A2, A3, A4) each power amplifier (P1, P2, P3, P4) being associated with a respective one of the plurality of transmit antennas (A1, A2, A3, A4) wherein at least one of the plurality of power amplifiers (P1) is permanently switched on during transmit operation, and, for energy saving, the base station (BS1) is adapted to selectively switch on or off at least one of the other power amplifiers (P2, P3, P4) based on an expected amount of data to be transmitted by the plurality of transmit antennas (A1, A2, A3, A4)
**characterized in that**
the base station (BS1) is adapted to operate the transmit antennas (A1, A2, A3, A4) with a transmission characteristic which resembles a transmission characteristic of a single transmit antenna, such that a user equipment in the cell cannot distinguish between the transmit antennas (A1, A2, A3, A4), the base station (BS1) being > further adapted to keep a transmit power spectral density (PDS1, PDS2) constant and to reduce a transmission bandwidth for keeping a reference signal received power constant when the at least one power amplifier (P2, P3, P4) is switched off.

2. Base station according to claim 1, wherein the at least one power amplifier (P1) which is permanently switched on has a higher maximum output power than at least one of the power amplifiers (P1, P2, P3, P4) which are selectively switched on or off.

3. Base station according to claim 1 or 2, being adapted to keep an overall transmission power of the transmit antennas (A1,A2,A3,A4) constant when the at least one power amplifier (P2, P3, P4) is switched off.

4. Base station according to any one of the preceding claims, being adapted to keep an overall transmit power spectral density (PSD1, PSD2) of the transmit antennas (A1,A2,A3,A4) constant when the at least one power amplifier (P2, P3, P4) is switched off.

5. Base station according to any one of the preceding claims, wherein a bandwidth (b1, b2) of the at least one active transmit antenna (A1) is changed when switching off the at least one power amplifier (P2, P3, P4)

6. Wireless network (1), in particular in compliance with the LTE standard, comprising at least two base stations (BS1) according to any one of claims 1 to 5.

7. Method for operating a base station (BS1) for a communications cell (C1,C2,C3) of a wireless network (1), the base station (BS1) comprising a plurality of power amplifiers (P1,P2,P3,P4) which provide transmit power to a plurality of transmit antennas (A1,A2,A3,A4) each power amplifier (A1,A2,A3,A4) being associated with a respective one of the plurality of transmit (P1,P2,P3,P4) antennas (A1,A2,A3,A4) the method comprising:
permanently switching on at least one of the plurality of power amplifiers (P1) during transmit operation, and, for energy saving, selectively switching on or off at least one of the power amplifiers (P2, P3, P4) based on an expected amount of data to be transmitted by the plurality of transmit antennas (A1,A2,A3,A4)
**characterized by**
operating the transmit antennas (A1,A2,A3,A4) with a transmission characteristic which resembles a transmission characteristic of a single transmit antenna, such that a user equipement in the cell cannot distinguish between the transmit antennas (A1,A2,A3,A4) and
keeping a transmit power spectral density (PSD1, PSD2) constant and reducing a transmission bandwidth for keeping a reference signal received power constant when the at least one power amplifier (P2,P3,P4) is switched off.

8. Method according to claim 7, further comprising: operating the power amplifiers (P1,P2,P3,P4) such that an overall transmit power and/or an overall transmit power spectral density generated by the plurality of transmit antennas (A1,A2,A3,A4) is kept constant when the at least one power amplifier (P2,P3,P4) is switched off.

9. Method according to claim 7 or 8, wherein a bandwidth (b1, b2) of the at least one active transmit antenna (A1) is changed when switching off the at least one power amplifier (P2,P3,P4)

10. Method according to any one of claims 7 to 9, wherein the at least one power amplifier (P2,P3,P4) is switched off for more than one second, preferably for more than ten seconds.

## Patentansprüche

1. Basisstation (BS1) für eine Kommunikationszelle (C1, C2, C3) eines drahtlosen Kommunikationsnetzwerks (1), umfassend:
Eine Mehrzahl von Sendeantennen (A1, A2, A3, A4), und
eine Mehrzahl von Leistungsverstärkern (P1, P2, P3, P4) zur Bereitstellung von Sendeleistung an die Mehrzahl von Sendeantennen (A1, A2, A3, A4), wobei jeder Leistungsverstärker (P1, P2, P3, P4) mit einer entsprechenden der Mehrzahl von Sendeantennen (A1, A2, A3, A4) assoziiert ist, wobei mindestens einer der Mehrzahl von Leistungsverstärkern (P1) während des Sendebetriebs permanent angeschaltet ist, und die Basisstation (BS1) zum Zweck der Stromeinsparung dazu ausgelegt ist, mindestens einen der anderen Leistungsverstärker (P2, P3, P4) auf der Basis einer erwarteten Menge von von der Mehrzahl von Sendeantennen (A1, A2, A3, A4) zu übertragenden Daten selektiv an- oder auszuschalten,
**dadurch gekennzeichnet, dass** die Basisstation (BS1) dazu ausgelegt ist, die Sendeantennen (A1, A2, A3, A4) mit einer Übertragungscharakteristik zu betreiben, welche einer Übertragungscharakteristik einer einzelnen Sendeantenne ähnelt, so dass ein Benutzerendgerät in der Zelle nicht zwischen den Sendeantennen (A1, A2, A3, A4) unterscheiden kann, wobei die Basisstation (BS1) weiterhin dazu ausgelegt ist, eine spektrale Sendeleistungsdichte (PDS1, PDS2) konstant zu halten und eine Übertragungsbandbreite zu reduzieren, um die Leistung eines empfangenen Bezugssignals konstant zu halten, wenn der mindestens eine Leistungsverstärker (P2, P3, P4) ausgeschaltet ist.

2. Basisstation nach Anspruch 1, wobei der mindestens eine Leistungsverstärker (P1), welcher permanent angeschaltet ist, eine höhere maximale Ausgangsleistung hat als mindestens einer der Leistungsverstärker (P1, P2, P3, P4), welche selektiv an- oder ausgeschaltet werden.

3. Basisstation nach Anspruch 1 oder 2, dazu ausgelegt, eine Gesamtsendeleistung der Sendeantennen (A1, A2, A3, A4) konstant zu halten, wenn der mindestens eine Leistungsverstärker (P2, P3, P4) ausgeschaltet ist.

4. Basisstation nach einem beliebigen der vorstehenden Ansprüche, dazu ausgelegt, eine spektrale Gesamtsendeleistungsdichte (PDS1, PDS2) der Sendeantennen (A1, A2, A3, A4) konstant zu halten, wenn der mindestens eine Leistungsverstärker (P2, P3, P4) ausgeschaltet ist.

5. Basisstation nach einem beliebigen der vorstehenden Ansprüche, wobei eine Bandbreite (b1, b2) der mindestens einen aktiven Sendeantenne (A1) bei Ausschalten des mindestens einen Leistungsverstärkers (P2, P3, P4) geändert wird.

6. Drahtloses Netzwerk (1), insbesondere gemäß dem LTE-Standard, umfassend mindestens zwei Basisstationen (BS1) gemäß einem beliebigen der Ansprüche 1 bis 5.

7. Verfahren zum Betreiben einer Basisstation (BS1) für eine Kommunikationszelle (C1, C2, C3) eines drahtlosen Netzwerks (1), wobei die Basisstation (BS1) eine Mehrzahl von Leistungsverstärkern (P1, P2, P3, P4) umfasst, welche Sendeleistung an eine Mehrzahl von Sendeantennen (A1, A2, A3, A4), bereitstellen, wobei jeder Leistungsverstärker (P1, P2, P3, P4) mit einer entsprechenden der Mehrzahl von Sendeantennen (A1, A2, A3, A4) assoziiert ist, wobei das Verfahren umfasst:
Permanentes Anschalten mindestens eines der Mehrzahl von Leistungsverstärkern (P1) während des Sendebetriebs, und zum Zweck der Stromeinsparung selektives An- oder Ausschalten der Leistungsverstärker (P2, P3, P4) auf der Basis einer erwarteten Menge von durch die Mehrzahl von Sendeantennen (A1, A2, A3, A4) zu übertragenden Daten,
**gekennzeichnet durch**
Betreiben der Sendeantennen (A1, A2, A3, A4) mit einer Übertragungscharakteristik, welche einer Übertragungscharakteristik einer einzelnen Sendeantenne ähnelt, so dass ein Benutzerendgerät in der Zelle nicht zwischen den Sendeantennen (A1, A2, A3, A4) unterscheiden kann, und
Konstanthalten einer spektralen Sendeleistungsdichte (PDS1, PDS2) und Reduzieren einer Übertragungsbandbreite, um die Leistung eines empfangenen Bezugssignals konstant zu halten, wenn der mindestens eine Leistungsverstärker (P2, P3, P4) ausgeschaltet ist.

8. Verfahren nach Anspruch 7, weiterhin umfassend: Betreiben der Leistungsverstärker (P1, P2, P3, P4) derart, dass eine Gesamtsendeleistung und/oder eine von der Mehrzahl von Sendeantennen (A1, A2, A3, A4) erzeugte spektrale Gesamtsendeleistungsdichte konstant gehalten wird, wenn der mindestens eine Leistungsverstärker (P2, P3, P4) ausgeschaltet ist.

9. Verfahren nach Anspruch 7 oder 8, wobei eine Bandbreite (b1, b2) der mindestens einen aktiven Sendeantenne (A1) bei Ausschalten des mindestens einen Leistungsverstärkers (P2, P3, P4) geändert wird.

10. Verfahren nach einem beliebigen der Ansprüche 7 bis 9, wobei der mindestens eine Leistungsverstärker (P2, P3, P4) für länger als eine Sekunde, vorzugsweise für länger als zehn Sekunden, ausgeschaltet wird.

## Revendications

1. Station de base (BS1) pour une cellule de communication (C1, C2, C3) d'un réseau de communication sans fil (1), comprenant :
une pluralité d'antennes de transmission (A1, A2, A3, A4), et
une pluralité d'amplificateurs de puissance (P1, P2, P3, P4) pour fournir une puissance de transmission à la pluralité d'antennes de transmission (A1, A2, A3, A4), chaque amplificateur de puissance (P1, P2, P3, P4) étant associé à une antenne respective parmi la pluralité d'antennes de transmission (A1, A2, A3, A4), dans laquelle au moins un parmi la pluralité d'amplificateurs de puissance (P1) est activé en permanence durant l'opération de transmission, et, afin d'économiser de l'énergie, la station de base (BS1) est adaptée pour activer ou désactiver de manière sélective au moins un des autres amplificateurs de puissance (P2, P3, P4) en se basant sur une quantité prévue de données devant être transmise par la pluralité d'antennes de transmission (A1, A2, A3, A4),
**caractérisée en ce que**
la station de base (BS1) est adaptée pour faire fonctionner les antennes de transmission (A1, A2, A3, A4) avec une caractéristique de transmission qui ressemble à une caractéristique de transmission d'une antenne de transmission unique, de sorte qu'un équipement utilisateur dans la cellule ne puisse pas distinguer les différentes antennes de transmission (A1, A2, A3, A4), la station de base (BS1) étant en outre adaptée pour garder constante une densité spectrale de puissance de transmission (PDS1, PDS2) et pour réduire une largeur de bande de transmission pour garder constante une puissance reçue du signal de référence lorsque l'au moins un amplificateur de puissance (P2, P3, P4) est désactivé.

2. Station de base selon la revendication 1, dans laquelle l'au moins un amplificateur de puissance (P1) qui est activé en permanence présente une puissance de sortie maximum supérieure à celle d'au moins un des amplificateurs de puissance (P1, P2, P3, P4) qui sont activés ou désactivés de manière sélective.

3. Station de base selon la revendication 1 ou 2, adaptée pour garder constante une puissance de transmission globale des antennes de transmission (A1, A2, A3, A4) lorsque l'au moins un amplificateur de puissance (P2, P3, P4) est désactivé.

4. Station de base selon l'une quelconque des revendications précédentes, adaptée pour garder constante une densité spectrale de puissance de transmission globale (PDS1, PDS2) des antennes de transmission (A1, A2, A3, A4) lorsque l'au moins un amplificateur de puissance (P2, P3, P4) est désactivé.

5. Station de base selon l'une quelconque des revendications précédentes, dans laquelle une largeur de bande (b1, b2) de l'au moins une antenne de transmission active (A1) est changée lors de la désactivation de l'au moins un amplificateur de puissance (P2, P3, P4).

6. Réseau sans fil (1), en particulier conforme à la norme LTE, comprenant au moins deux stations de base (BS1) selon l'une quelconque des revendications 1 à 5.

7. Procédé de fonctionnement d'une station de base (BS1) pour une cellule de communication (C1, C2, C3) d'un réseau sans fil (1), la station de base (BS1) comprenant une pluralité d'amplificateurs de puissance (P1, P2, P3, P4) qui fournissent une puissance de transmission à une pluralité d'antennes de transmission (A1, A2, A3, A4), chaque amplificateur de puissance (P1, P2, P3, P4) étant associé à une antenne de transmission respective parmi la pluralité d'antennes de transmission (A1, A2, A3, A4), le procédé comprenant l'étape suivante :
activer en permanence au moins un amplificateur de puissance parmi la pluralité d'amplificateurs de puissance (P1 durant une opération de transmission, et, afin d'économiser de l'énergie, activer ou désactiver de manière sélective au moins un des amplificateurs de puissance (P2, P3, P4) en se basant sur une quantité prévue de données devant être transmise par la pluralité d'antennes de transmission (A1, A2, A3, A4),
**caractérisé par** les étapes suivantes
faire fonctionner les antennes de transmission (A1, A2, A3, A4) avec une caractéristique de transmission qui ressemble à une caractéristique de transmission d'une antenne de transmission unique, de sorte qu'un équipement utilisateur dans la cellule ne puisse pas distinguer les différentes antennes de transmission (A1, A2, A3, A4) et
garder constante une densité spectrale de puissance de transmission (PSD1, PSD2) et réduire une largeur de bande de transmission pour garder constante une puissance reçue du signal de référence lorsque l'au moins un amplificateur de puissance (P2, P3, P4) est désactivé.

8. Procédé selon la revendication 7, comprenant en outre l'étape suivante : faire fonctionner les amplificateurs de puissance (P1, P2, P3, P4) de sorte qu'une puissance de transmission globale et/ou une densité spectrale de puissance de transmission globale générée(s) par la pluralité d'antennes de transmission (A1, A2, A3, A4) soit/soient gardée(s) constante(s) lorsque l'au moins un amplificateur de puissance (P2, P3, P4) est désactivé.

9. Procédé selon la revendication 7 ou 8, dans lequel une largeur de bande (b1, b2) de l'au moins une antenne de transmission active (A1) est changée lors de la désactivation de l'au moins un amplificateur de puissance (P2, P3, P4).

10. Procédé selon l'une quelconque des revendications 7 à 9, dans lequel l'au moins un amplificateur de puissance (P2, P3, P4) est désactivé pendant plus d'une seconde, de préférence pendant plus de dix secondes.
